# EUROPÄISCHE PATENTSCHRIFT

(11) **EP 1 396 701 B1**
(45) Veröffentlichungstag und Bekanntmachung des Hinweises auf die Patenterteilung: **22.04.2015**
(21) Anmeldenummer: 03015761.4
(22) Anmeldetag: 10.07.2003
(51) Int. Cl.: G01B 5/25, G01B 5/252, G01B 7/31, G01B 7/312, G01B 11/27, G01B 21/22, G01B 21/24

(54) **Verfahren zur Bestimmung lateralen und angularen Versatzes zweier hintereinander angeordneter Wellen**
Method for determining lateral and angular offsets between two consecutive shafts
Methode pour la détermination de décalage latéral et angulaire entre deux arbres consécutifs

(30) Priorität: 08.08.2002 DE 10236555
(43) Veröffentlichungstag der Anmeldung: 10.03.2004
(73) Patentinhaber: Prüftechnik Dieter Busch AG, 85737 Ismaning (DE)
(72) Erfinder: Hermann, Michael, 78052 Villingen (DE)
(74) Vertreter: Schwan Schorer & Partner mbB

(56) Entgegenhaltungen:
- US-A- 5 026 998
- US-A- 5 263 261

## Beschreibung

Das erfindungsgemäße Verfahren zur Bestimmung lateralen und angularen Versatzes zweier hintereinander angeordneter Wellen betrifft eine Weiterentwicklung der in der DE 39 11 307 beschriebenen Erfindung (Erfinder: R. Hoelzl). Eine sinngemäss gleichwertige Darstellung der in der genannten Veröffentlichung beschriebenen Erfindung findet sich in der US 5,263, 261. Auf beide Veröffentlichungen wird vollumfänglich Bezug genommen, um Längen in der vorliegenden Beschreibung zu vermeiden.

Die Erfindung geht von folgender Erkenntnis aus:

In der Vergangenheit bestand ein zu lösendes Teil-Problem darin, zwei über ein Winkelmass und zusätzliche Randbedingungen miteinander verknüpfte mechanische Bewegungen (Auslenkungen) durch geeignete Kennwerte zu beschreiben, wie dies am besten aus den Figuren der o.g. Patentschriften hervorgeht. Die genannten Bewegungen waren dabei als im wesentlichen sinusförmig und mit vorgegebener Periodizität zu betrachten. Das zu lösende Problem bestand u.a. darin, die genannten Kennwerte der sinusförmig verlaufenden Bewegungen (Auslenkungen) aus einer minimalen Anzahl von zumeist "verrauschten" Messwerten zu bestimmen. Die in der DE '307 aufgezeigte komplette Lösung sieht dabei u.a. vor, die sinusförmigen Bewegungen in einem einzigen Ansatz durch die Parameter einer durch die Sinus-Anteile zweier Einzelbewegungen definierten Lissajous-Ellipse zu spezifizieren. Es sind dazu mindestens fünf Messwert-Paare zu erfassen. Gleichzeitig wird mindestens eine Winkel-Information zur Definition einer räumlichen Referenzlage beteiligter Wellen gefordert Darüberhinaus ist eine vorgesehene Drehrichtung dieser Wellen anzugeben. Die zugehörige Berechnung sieht eine zweidimensionale Analyse der als Ortskurve zu betrachtenden Lissajous-Ellipse vor. Demgegenüber beschränkt sich die Analyse gemäss US 5 263 261 auf die doppelt vorgenommene, jeweils eindimensionale Analyse der beteiligten Sinusfunktionen, um danach unter Zusammenführung der erhaltenen Ergebnisse auf ein im Prinzip gleiches Ergebnis zu kommen, welches durch die gewählte Vorgehensweise jedoch mit einer grösseren Fehlerquote behaftet sein kann, gemäss einem allgemein bekannten Additionstheorem für Rauschmaße. Um die in der US 5 263 261 beschriebene Analyse durchzuführen, ist jedoch (wie dies auch in der in der DE '307 als eine Teilmenge des vorgeschlagenen Verfahrens dargestellt und beansprucht wird) folgendes erforderlich: Zugleich mit der Erfassung der o.g. Bewegungsinformationen, sei es durch mechanische Messwerterfassung oder durch Registrierung entsprechend gewandelter elektrischer Signale, ist die Registrierung von mindestens drei Winkellagen der beteiligten Achsen, Wellen oder dgl. durchzuführen. Anders formuliert heisst dies, dass gemäss der US '261 mehr als nur eine einzige als "Stützstelle" dienende Winkellage messtechnisch zu erfassen und zu registrieren ist.

Wie man aus den Firmenschriften der Firmen Prüftechnik AG und CSI, Inc. entnimmt, werden zur Erfassung mehrerer interessierender Winkellagen elektrisch oder elektronisch wirkende Inclinometer eingesetzt, welche eine Auflösung und Reproduzierbarkeit von etwa 1 Grad aufweisen.

Ein Verfahren gemäß dem Oberbegriff von Anspruch 1 ist aus der US 5,026,998 bekannt.

Die vorliegende Erfindung geht dabei von folgendem aus: Wird, wie dies aus beiden obig zitierten Patentschriften bereits bekannt ist, mehr als eine Winkellage auszurichtender Wellen zusammen mit diesbezüglichen Auslenkungen vermessen und registriert, um mehr als nur eine winkelmässige "Stützstelle" zu erhalten, so sind diese Winkel-Angaben bereits erheblich "verrauscht", d.h. wegen der technischen Eigenschaften der verwendeten Inclinometer mit gewissen Messunsicherheiten behaftet. Es war bislang nicht bekannt, dass hierdurch ein Problem vorliegt: Dieses besteht darin, dass das Ergebnis einer nachfolgenden Berechnung von Korrektur- und Justagewerten zum Ausrichten von Maschinen mit vermeidbaren Restfehlern behaftet ist. (Es sei angemerkt, dass dieses Problem bei dem aus der Schrift '307 bekannten "inclinometerlosen" Verfahren naturgemäss nicht auftritt, falls nur ein einziger Referenzwinkel zu bestimmen ist). Das genannte Problem tritt jedoch dann merklich in Erscheinung, wenn anstelle der normalerweise in diesem Zusammenhang verwendeten, analog arbeitenden Sensoren für die Auslenkungs-Messwerte solche auf CCD- oder CMOS-Pixel-Basis benutzt werden, deren Messgenauigkeit noch günstiger ist, als dies bislang der Fall war. Anders formuliert, stellt sich das Problem und die Aufgabe folgendermassen dar: es wird durch die "verrauschten" Inclinometerwerte ein Messfehler erzeugt, dessen Einfluss auf ein zu erzielendes Berechnungs-Ergebnis (mit dem nachfolgenden Ziel einer Maschinen-Justage) auf ein Minimum zu reduzieren ist.

Diese Aufgabe wird durch ein Verfahren gemäß Anspruch 1.

In bevorzugter Ausgestaltung des Verfahrens werden solche Gerätschaften und/oder Programme zur Verfügung gestellt, die es gestatten, dass als Ausgleichsprinzip die "Methode der kleinsten Quadrate" angewendet wird - Anstelle der Methode der kleinsten Quadrate(-summe) ist es auch möglich, eine Vorgehensweise zu wählen, bei der
a) die Messwerttripel als Punkte in einem dreidimensionalen Raum aufgefasst werden,
b) die Parameter einer, diese Punkte ausgleichenden, Helix solange verändert werden, bis die Summe aller Abstände der genannten Punkte, oder die Summe der Quadrate aller Abstände der genannten Punkte, zu der genannten ausgleichenden Helix einen minimalen Wert annimmt
c) die Parameter einer so aufgefundenen ausgleichenden Helix als Grundlage für die ggf. durchzuführende Berechnung von Korrekturwerten verwendet werden.

In einer weiteren, ähnlichen Ausgestaltung des erfindungsgemässen Verfahrens werden unter Verwendung einer vergleichbaren Summationsvorschrift die (immer positiv zu wertenden, nach üblichen Definitionen berechneten) Abstände der genannten Punkte zu der genannten ausgleichenden elliptischen Helix jeweils in eine Potenz erhoben, welche fest vorgegeben wird und deren Wert von etwa 0,5 bis 4,5 wählbar ist.

Die erfindungsgemäss vorgesehene Ausgleichung gemessener Punktetripel an eine ausgleichende elliptische Helix erfordert typischerweise ein Mindestmass an Rechnerleistung. Die grundlegenden Methoden einer solchen Ausgleichsrechnung sind an sich bekannt, vgl. das Buch R. Ludwig, Methoden der Fehler und Ausgleichsrechnung, Library of Congress Catalog Card No. 69-17093, verlegt bei Vieweg und Sohn, 1969.

Zur bestmöglichen Ausnutzung einer vorhandenen Rechnerleistung kann es - je nach vorgegebener Rechnerstruktur - von Vorteil sein, die Ausgleichsrechnung zur Bestimmung der Parameter einer als optimal angesehenen elliptischen Helix unter Verwendung sog. neuronaler Netze und/oder einer sog. Fuzzy Logic durchzuführen, und einen laufenden Rechengang mit genügend genauem Ergebnis abzubrechen, wenn keine signifikante Veränderung der aufgefundenen Parameter mehr stattfindet.

Alternativ kann das vorliegende Problem auch so aufgefasst werden, dass die Parameter "zweier Sinusschwingungen im Raum" im Sinne einer Ausgleichsrechnung ermittelt werden. Sofern der Rechner mit einer Recheneinheit zur Darstellung von Integraltransformationen (Fourier, Hadamard, Haar, Wavelet u.a.) ausgestattet ist, kann eine solche Einrichtung mit Vorteil dazu benutzt werden, das geschilderte Problem mittels solcher Integraltransformationen zu lösen. Gemäss der vorliegenden Erfindung ist es dabei von Vorteil, dass einige dieser Transformationen von sich aus die Eigenschaft aufweisen, automatisch eine beste Anpassung im Sinne einer Ausgleichsrechnung zu liefern. Dementsprechend betrifft die Erfindung auch ein Verfahren, bei der eine Ausgleichsrechung zur Bestimmung der Parameter einer als optimal angesehenen elliptischen Helix unter Verwendung einer dreidimensionalen Integraltransformation, insbesondere einer dreidimensionalen Fouriertransformation, durchgeführt wird.

Ferner sei darauf hingewiesen, dass bei dem verwendeten Begriff "elliptische Helix" auch diejenigen Sonderfälle eingeschlossen sein sollen, bei der die allgemeine Form einer Ellipse deswegen nicht mehr zu erkennen ist, weil es sich um die geometrischen Örter "Kreis", "Strecke" oder "Punkt" handelt. Wie bekannt, stellen diese lediglich Sonderfälle einer zugehörigen und durch spezielle Parameter gekennzeichneten Ellipse dar und können somit im allgemeinen einem weiteren Rechnungsgang zugrundegelegt werden.

Die mit dem erfindungsgemässen Verfahren errechneten Werte zur Justage von Maschinen oder Maschinenzügen werden entweder einer Bedienperson auf optischem oder akustischen Wege mitgeteilt. Gemäss einem anderen Aspekt der Erfindung ist es aufgrund der gesteigerten Genauigkeit nunmehr von Vorteil, die Justage durch Elektrowerkzeuge durchführen zu lassen, welche durch den gleichen Rechner angesteuert werden, welcher auch die diesbezüglichen Korrekturwerte errechnet hat. Dies kann im Sinne einer Stuerstruktur (open loop control) oder einer Regelstruktur geschehen (closed loop control). Im letzteren Fall wird das genannte Elektrowerkzeug zur Justage von Maschinen solange betätigt, bis keine Verbesserung der Justage bei den aufeinander auszurichtenden Maschinen mehr zu erreichen ist. In diesem Sinne betrifft die Erfindung also auch ein Verfahren zur Justierung von Maschinen mit lateral oder angular versetzten Achsen, welches unter Verwendung eines der im vorgehenden beschriebenen speziellen Ausgleichs-Rechenverfahren aufgefundene Korrekturwerte dazu verwendet, mittels nachgeschalteter, elektrisch angetriebener Werkzeuge die Position der den Wellen, Achsen oder Walzen zugeordneten Maschinen, oder Teile davon, gezielt zu verändern.

Zur Verdeutlichung des zugrundeliegenden Problems und seiner Lösung wird im folgenden die beigefügte Zeichnung beschrieben. Es zeigt
- Fig. 1 bis 5: verschiedene bekannte Vorrichtungen und Verfahren nach dem Stand der Technik, mit denen sinusförmig über einen Drehwinkel "phi" variierende Meßwerte gewonnen werden können
- Fig. 6: die Konstruktion einer interessierenden Ellipse anhand sinusförmig variierenden Meßwerte, gemäß dem Stand der Technik
- Fig.7: eine vergleichbare Ellipse, mit Fehlerbalken zur zweidimensionalen Angabe von bekannten oder errechneten statistischen Fehlern, wobei die Ellipse gleichzeitig eine Projektion der Raumkurve aus Fig. 8 darstellt
- Fig. 8: eine perspektivische Längs-Seitenansicht auf eine als elliptische Helix vorliegenden dreidimensionale Kurve, mit Fehlerbalken zur dreidimensionalen Angabe von statistischen Fehlern

Die im folgenden gegebenen Erläuterungen des erfindungsgemäßen Verfahrens beziehen sich vorrangig auf die Ermittlung von interessierenden Parametern bei der Vermessung von hintereinander angeordneten Maschinenwellen. Das Verfahren kann aber mit gleichem Vorteil und Nutzen bei der Vermessung der Parallelität von Achsen, Rollen oder Walzen usw. verwendet werden.

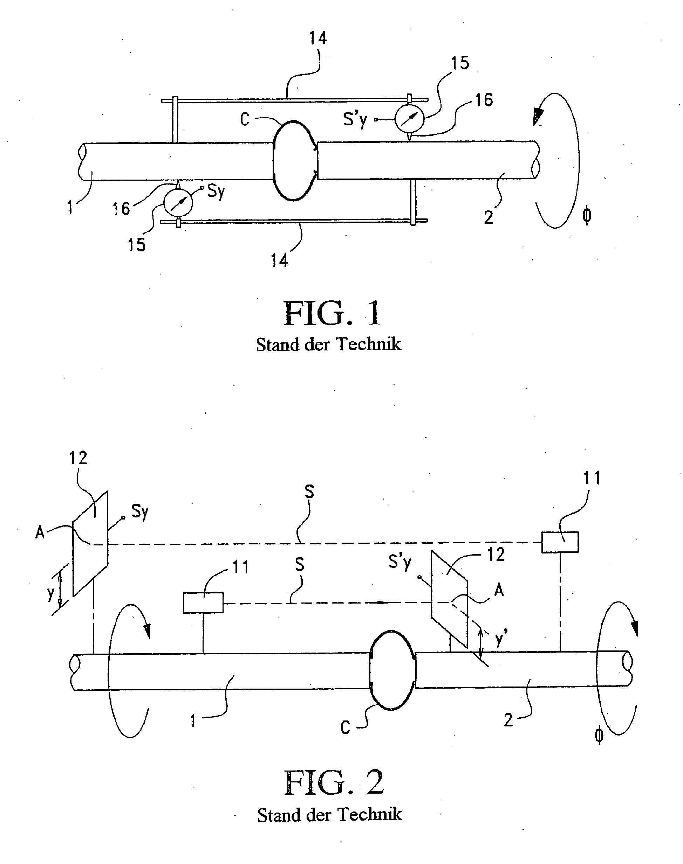

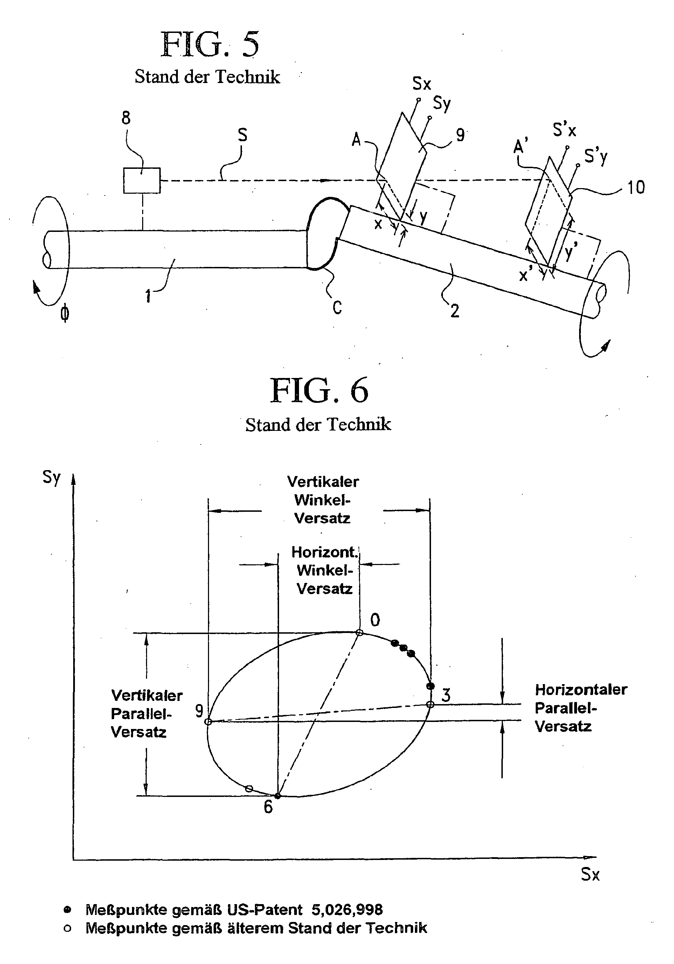

Die Wirkungsweise der in den Fig. 1 bis 6 können als aus der Patentliteratur bekannt vorausgesetzt werden. Es ist anzumerken, daß die Ellipse der Fig. 6 auch als Lissajous-Figur aufgefaßt werden kann, welche von zwei gleichfrequenten Signalen erzeugt wird, welche unterschiedliche Amplituden und eine Phasendifferenz aufweisen können.

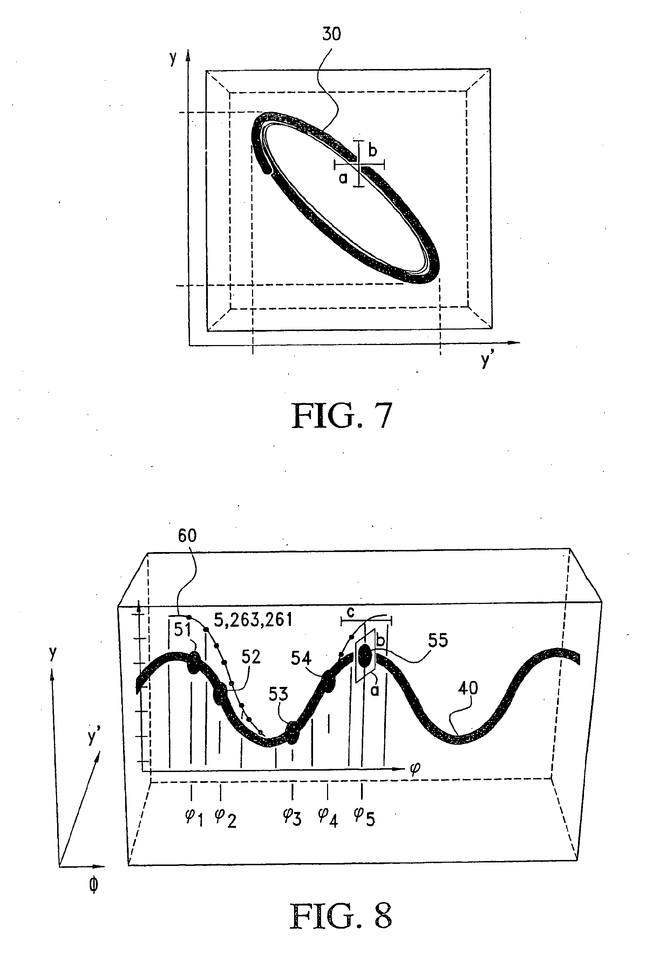

Gemäß dem erfindungsgemäßen Verfahren ist es möglich, die interessierenden Kennwerte einer zu ermittelnden Ellipse genauer zu ermitteln, wie dies in Fig. 7 und 8 dargestellt wird.

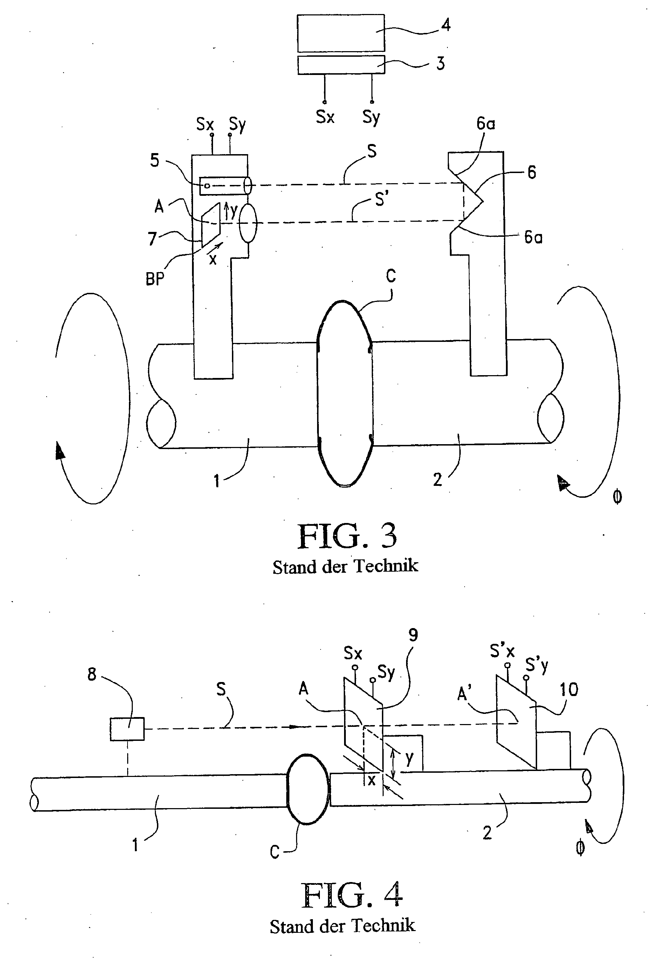

Dabei entspricht die als Projektion einer Raumkurve dargestellte Funktion der Fig. 7 der in der DE '307 dargestellten Fig. 8, mit Ausnahme der Bezeichnung der Koordinaten. Die gewählten Koordinatenbezeichnungen y und y' (lies: y Strich) sind nämlich der dortigen Fig. 4 entnommen. Weiterhin dargestellt sind auf statistischer Basis errechnete Messunsicherheiten (Rauschen) a) und b), welche aber in anderer Weise als nach dem Stand der Technik errechnet werden und die denjenigen entsprechen, die in der Folgefigur 8 gezeigt sind. Da die in Fig. 7 gezeigte Figur die Projektion einer zugehörigen Raumkurve ist, erstreckt sich die in Fig. 8 gezeigte Messunsicherheit c) senkrecht zur Papierebene der Fig. 7, und kann somit dort nicht dargestellt werden.

Aus Fig. 8 geht hervor, wie das zugrundeliegende Problem einer Ausgleichsrechnung nicht für Funktionen mit einer Variablen, oder als Ausgleichsverfahren für ein zweidimensionales Problem, sondern als Ausgleichsverfahren für eine dreidimensionale Funktion, i.e. Raumkurve, behandelt und gelöst wird. Die erfaßten obig erläuterten Meßwerttripel können nämlich in dreidimensionaler Weise über den erfaßten Drehwinkel dargestellt werden und erzeugen auf solche Weise eine Helix von elliptischem Querschnitt. Das zugehörige Koordinatensystem wird dabei durch die Komponenten für y, y' und phi gebildet, wobei der Winkel phi den Drehwinkel der verwendeten Meßzeiger gegenüber einem Referenzwinkel wie z.B. der Senkrechten repräsentiert. - Unter diesem Aspekt und wie anhand der Raumkurve aus Fig. 8 demonstriert werden kann, besteht eine optimale Lösung des zugrundeliegenden Ausgleichsproblems darin, eine optimale Helix zu berechnen. Für eine solche optimale Helix gilt, daß die als Raumpunkte aufgefaßten Meßwerttripel im statistischen Mittel den geringstmöglichen, und zwar dreidimensionalen, Abstand zu dieser aufweisen.

Die Fig. 8 kann zu einem Vergleich mit der in der US '261, Fig. 4A dargestellten Sinusfünktion herangezogen werden. Beim Angleich der in der US Patentschrift dargestellten Messpunkte werden in zwei separaten Schritten eindimensionale Ausgleichsrechnungen durchgeführt. Diese führen im Falle von nur drei Winkelpositionen der Meßzeiger zu jeweils exakten Lösungen, welche keiner Ausgleichsrechnung bedürfen und einer solchen daher nicht zugeführt werden sollten. Im Gegensatz dazu wird in Fig. 8 gezeigt, dass es vorteilhafter, wenn auch schwieriger ist, einen dreidimensionalen Ausgleich durchzuführen. Neben den durch die Bezugszeichen a) und b) gekennzeichneten Messunsicherheiten für Messungen an einem bestimmten Winkel "phi", wie aus der DE '307 und der US ' 261 bekannt, wird gemäss der vorliegenden Erfindung also nunmehr auch die Messunsicherheit für die Winkelmessung an sich berücksichtigt, wie dies durch das Bezugszeichen c) in Fig. 8 markiert ist. Die in Fig. 8 dargestellte Abszisse "phi" betrifft dabei, in bereits beschriebener Weise, den Drehwinkel, um den ein Messzeiger geschwenkt oder gedreht wird.
Unter diesen Voraussetzungen werden nunmehr mindestens vier Meßwerttripel benötigt, um neben den grundlegenden gesuchten Parametern für den elliptischen Querschnitt der Helix auch eine Angabe für die Qualität eines durchgeführten Angleichs machen zu können.

Die Erfindung umfässt weiterhin zugehörige Einrichtungen, insbesondere in Form von Rechnern oder Computern, und zugehörige Rechenprogramme zur Ausführung der im obigen beschriebenen neuartigen Ausgleichsverfahren.

## Patentansprüche

1. Verfahren zur Bestimmung eines lateralen und/oder angularen Versatzes zweier hintereinander angeordneter Wellen (1, 2), Achsen, Walzen oder dergleichen, wobei mittels mindestens einem, relativ zu einer der Wellen, Achsen oder Walzen starr angebrachten Messzeiger (S), und mindestens zwei dem oder den Messzeigem zugeordneten und starr auf einer jeweils anderen Welle, Achse oder Walze angebrachten Messaufnehmern oder Referenzelementen (A, A') in mehreren, von Welle zu Welle jeweils einander entsprechenden Mess-Winkelpositionen zwei voneinander unabhängige Messsignale (Sₓ, S_{y}, S'ₓ, S'_{y}) erzeugt werden, die jeweils auf einer auf die betreffende Mess-Winkelposition bezogene Komponente des kürzesten Abstandes, den die Mittelachsen der Wellen ggf. voneinander aufweisen, und einer angularen Komponente, unter dem die Mittelachsen windschief versetzt sind, entsprechen oder aus denen diese Komponenten ableitbar sind,
a) die Wellen (1, 2) in mindestens vier verschiedene, frei wählbare Mess-Winkelpositionen, in denen Messungen vorgenommen werden, gedreht werden,
b) in jeder Winkelposition mit Messunsicherheiten behaftete Messignale (Sₓ, S_{y}, S'ₓ, S'_{y}) aufgenommen und registriert werden, wobei die Messignale als Messwert-Tripel (Φ, y, y') bereitgestellt werden und ein Messwert-Tripel (Φ, y, y') jeweils umfasst: den gemessenen Winkelwert (φ) einer Mess-Winkelposition, ein von einem ersten Messaufnehmer oder Referenzelement erzeugten Messwert (y), sowie ein von einem zweiten Messaufnehmer oder Referenzelement erzeugten Messwert (y')
**dadurch gekennzeichnet, dass**
c) mittels eines Rechners eine dreidimensionale Ausgleichsrechnung oder Anpassung durchgeführt wird, bei der die Kennwerte für eine elliptische, sich periodisch fortsetzende Schraubenlinie, oder deren Approximation durch andere Funktionen , nach einem vorgegebenen Ausgleichsprinzip errechnet werden , wobei die Messwert-Tripel über den erfassten Drehwinkel dargestellt werden und auf solche Weise die Schraubenlinie erzeugen, und
d) anhand der Kennwerte der elliptischen Schraubenlinie unter Berücksichtigung zumindest einer der bekannten Winkellagen und der Drehrichtung der Wellen (1, 2) beim Drehen in die Mess-Winkelpositionen, mittels des Rechners die räumliche Lage der Wellen, Achsen oder Walzen zueinander, und ggf. Korrekturwerte für deren Lagekorrektur zur Beseitigung eines eventuell festgestellten Fluchtungsfehlers, ermittelt werden.

2. Verfahren nach Anspruch 1, **dadurch gekennzeichnet, dass** als Ausgleichsprinzip die "Methode der kleinsten Quadrate" angewendet wird

3. Verfahren nach Anspruch 1 oder 2, **dadurch gekennzeichnet, dass**
a) die Messwerttripel (Φ, y, y') als Punkte in einem dreidimensionalen Raum aufgefasst werden,
b) die Parameter einer, diese Punkte ausgleichenden, Helix (40) solange verändert werden, bis die Summe aller Abstände der genannten Punkte, oder die Summe der Quadrate aller Abstände der genannten Punkte, zu der genannten ausgleichenden Helix einen minimalen Wert annimmt,
c) die Parameter einer so aufgefundenen ausgleichenden Helix als Grundlage für die durchzurührende Berechnung von Korrekturwerten gemäss Anspruch 1 verwendet werden

4. Verfahren nach Anspruch 1 oder 2, **dadurch gekennzeichnet, dass**
a) die Messwerttripel (Φ, y, y') als Punkte in einem dreidimensionalen Raum aufgefasst werden,
b) die Parameter einer, diese Punkte ausgleichenden, Helix (40) solange verändert werden, indem die positiv definiten Abstände der genannten Punkte zu der genannten ausgleichenden elliptischen Helix jeweils in eine Potenz erhoben werden, welche fest vorgegeben wird und deren Wert von etwa 0,5 bis 4,5 wählbar ist, bis die Summe aller Potenzen der Abstände der genannten Punkte zu der genannten ausgleichenden Helix einen minimalen Wert annimmt,
c) die Parameter einer so aufgefundenen ausgleichenden Helix als Grundlage für die durchzurührende Berechnung von Korrekturwerten gemäss Anspruch 1 verwendet werden.

5. Verfahren nach Anspruch 1, bei der eine Ausgleichrechnung zur Bestimmung der Parameter einer als optimal angesehenen elliptischen Helix (40) unter Verwendung neuronaler Netze und/oder einer Fuzzy Logic durchgeführt wird

6. Verfahren nach Anspruch 1, bei der eine Ausgleichsrechung zur Bestimmung der Parameter einer als optimal angesehenen elliptischen Helix (40) unter Verwendung einer dreidimensionalen Integraltransformation durchgeführt wird.

7. Verfahren nach einem der Ansprüche 1 bis 6, bei dem die geometrischen Örter "Kreis", "Strecke" oder "Punkt" als Sonderfälle einer zugehörigen und durch spezielle Parameter gekennzeichneten Ellipse angesehen und ggf einer weiteren Rechnung zugrundegelegt werden.

8. Verfahren zur Justierung von Maschinen mit lateral oder angular versetzten Achsen, welches unter Verwendung eines Verfahren nach einem der Ansprüche 1 bis 7 aufgefundene Korrekturwerte dazu verwendet, mittels nachgeschalteter, elektrisch angetriebener Werkzeuge die Position der den Wellen, Achsen oder Walzen zugeordneten Maschinen, oder Teile davon, gezielt zu verändern

## Claims

1. Method for determining a lateral and/or angular offset between two tandem-arranged shafts (1, 2), axles, rollers or the like, at least one measuring pointer (S) rigidly fitted relative to one of the shafts, axles or rollers, and at least two measuring pick-ups or reference elements (A, A') assigned to the measuring pointer or pointers and rigidly fitted on a respectively different shaft, axle or roller being used in a plurality of measuring angular positions corresponding to one another in each case from shaft to shaft to generate two mutually independent measuring signals (Sₓ, S_{y}, S'_{y}, S'_{y}) which correspond in each case to a component, referred to the relevant measuring angular position, of the shortest spacing which the center axes of the shafts possibly exhibit from one another, and to an angular component at which the center axes are offset askew, or from which signals said components can be derived,
a) the shafts (1, 2) being turned into at least four different, freely selectable measuring angular positions in which measurements are taken, and
b) in each angular position measuring signals (Sₓ, S_{y}, S'ₓ, S'_{y}) affected by measurement uncertainties being picked up and recorded, the measuring signals being provided as measured-value triplets (Φ, y, y') and one measured-value triplet (Φ, y, y') respectively comprising: the measured angular value (Φ) of a measuring angular position, a measured value (y) generated by a first measuring pick-up or reference element, and a measured value (y') generated by a second measuring pick-up or reference element, **characterized in that**
c) a calculating device is used to carry out a three-dimensional fitting calculation or adaptation in which the characteristic values are calculated in accordance with a prescribed fitting principle for an elliptical, periodically continuing helical curve, or its approximation by other functions, the measured-value triplets being represented via the acquired angle of rotation and generating the helical curve in such a way and
d) the characteristic values of the elliptical helical curve, taking account of at least one of the known angular positions and the direction of rotation of the shafts (1, 2) during rotation into the measuring angular positions, are used by means of the calculating device to determine the spatial position of the shafts, axles or rollers relative to one another and, if appropriate, correction values for their positional correction for the purpose of eliminating an alignment error which may have been established.

2. Method according to Claim 1, **characterized in that** the "method of least squares" is applied as the fitting principle.

3. Method according to Claim 1 or 2, **characterized in that**
a) the measured-value triplets (Φ, y, y') are interpreted as points in a three-dimensional space,
b) the parameters of a helix (40) fitting said points are varied until the sum of all the spacings of said points, or the sum of the squares of all the spacings of said points assumes a minimum value relative to said fitting helix, and
c) the parameters of a fitting helix thus found are used as a basis for the calculation, to be carried out, of correction values in accordance with Claim 1.

4. Method according to Claim 1 or 2, **characterized in that**
a) the measured-value triplets (Φ, y, y') are interpreted as points in a three-dimensional space,
b) the parameters of a helix (40) fitting said points are varied, by the positively definite spacings of said points from said fitting elliptical helix being raised in each case to a power which is stipulated and whose value can be selected from approximately 0.5 to 4.5, until the sum of all the powers of the spacings of said points assumes a minimum value relative to said fitting helix, and
c) the parameters of a fitting helix thus found are used as a basis for the calculation, to be carried out, of correction values in accordance with Claim 1.

5. Method according to Claim 1, in which a fitting calculation is carried out to determine the parameters of an elliptical helix (40) regarded as optimum by using neural networks and/or fuzzy logic.

6. Method according to Claim 1, in which a fitting calculation is carried out to determine the parameters of an elliptical helix (40) regarded as optimum by using a three-dimensional integral transformation.

7. Method according to one of Claims 1 to 6, in which the geometrical loci of "circle", "line" or "point" are regarded as special cases of an associated ellipse defined by special parameters, and are used, if appropriate, as a basis for a further calculation.

8. Method for adjusting machines with laterally or angularly offset axes, which uses correction values found by means of a method according to one of Claims 1 to 7 for the purpose of specifically varying the position of the machines , or parts thereof, assigned to the shafts, axles or rollers by means of downstream, electrically driven tools.

## Revendications

1. Procédé de détermination d'un décalage latéral et/ou angulaire de deux arbres (1, 2), axes, cylindres ou similaires disposés l'un derrière l'autre, dans lequel, au moyen d'au moins un indicateur de mesure (S) installé fixement par rapport à un des arbres, axes ou cylindres et d'au moins deux enregistreurs de mesure ou éléments de référence (A, A') associés à l'indicateur ou aux indicateurs de mesure et installés fixement sur un autre arbre, axe ou cylindre respectif, deux signaux de mesure (Sₓ, S_{y}, S'ₓ, S'_{y}) indépendants l'un de l'autre sont générés dans plusieurs positions angulaires de mesure se correspondant respectivement d'arbre à arbre, lesquels signaux correspondent respectivement à un composant en rapport avec la position angulaire de mesure concernée de la distance la plus courte que les axes médians des arbres présentent le cas échéant l'un par rapport à l'autre et à un composant angulaire sous lequel les axes médians sont décalés obliquement ou à partir desquels signaux de mesure ces composants sont dérivables,
a) les arbres (1, 2) sont tournés dans au moins quatre positions angulaires de mesure différentes librement sélectionnables et dans lesquelles des mesures sont effectuées,
b) des signaux de mesure (Sₓ, S_{y}, S'ₓ, S'_{y}) entachés d'incertitudes de mesure dans chaque position angulaire sont reçus et enregistrés, les signaux de mesure étant délivrés sous forme de triplets de valeur de mesure (Φ, y, y') et un triplet de valeur de mesure (Φ, y, y') comprenant respectivement : la valeur angulaire mesurée (Φ) d'une position angulaire de mesure, une valeur de mesure (y) générée par un premier enregistreur de mesure ou élément de référence et une valeur de mesure (y') générée par un second enregistreur de mesure ou élément de référence,
**caractérisé en ce que**
c) au moyen d'un calculateur, un calcul de compensation ou une adaptation tridimensionnel(le) est effectué(e), lors duquel ou de laquelle les valeurs caractéristiques pour une ligne hélicoïdale elliptique se poursuivant périodiquement ou leur approximation sont calculées par d'autres fonctions d'après un principe de compensation prédéfini, les triplets de valeur de mesure étant représentés par l'angle de rotation détecté et générant de cette façon la ligne hélicoïdale, et
d) à partir des valeurs caractéristiques de la ligne hélicoïdale elliptique, en tenant compte d'au moins une des positions angulaires connues et du sens de rotation des arbres (1, 2), lors de la rotation dans les positions angulaires de mesure, la situation spatiale mutuelle des arbres, axes ou cylindres et le cas échéant des valeurs correctives pour leur correction de position sont déterminées au moyen du calculateur pour corriger une erreur d'alignement éventuellement constatée.

2. Procédé selon la revendication 1, **caractérisé en ce qu'**on utilise comme principe de compensation la « méthode des plus petits carrés ».

3. Procédé selon la revendication 1 ou 2, **caractérisé en ce que**
a) les triplets de valeur de mesure (Φ, y, y') sont relevés sous forme de points dans un espace tridimensionnel,
b) les paramètres d'une hélice (40) équilibrant ces points sont modifiés jusqu'à ce que la somme de toutes les distances entre les points cités, ou la somme des carrés de toutes les distances entre les points cités, et l'hélice d'équilibrage citée prenne une valeur minimale,
c) les paramètres d'une hélice d'équilibrage ainsi trouvée sont utilisés en tant que base pour le calcul de valeurs correctives à réaliser selon la revendication 1.

4. Procédé selon la revendication 1 ou 2, **caractérisé en ce que**
a) les triplets de valeur de mesure (Φ, y, y') sont relevés sous forme de points dans un espace tridimensionnel,
b) les paramètres d'une hélice (40) équilibrant ces points sont modifiés en élevant respectivement les distances définies positivement entre les points cités et l'hélice d'équilibrage elliptique citée à une puissance qui est fixement prédéfinie et dont la valeur peut être choisie entre environ 0,5 et 4,5 jusqu'à ce que la somme de toutes les puissances des distances entre les points cités et l'hélice d'équilibrage citée prenne une valeur minimale,
c) les paramètres d'une hélice d'équilibrage ainsi trouvée sont utilisés en tant que base pour le calcul de valeurs correctives à réaliser selon la revendication 1.

5. Procédé selon la revendication 1, dans lequel un calcul d'équilibrage est réalisé pour déterminer les paramètres d'une hélice elliptique (40) considérée comme optimale en utilisant des réseaux neuronaux et/ou une logique floue.

6. Procédé selon la revendication 1, dans lequel un calcul d'équilibrage est réalisé pour déterminer les paramètres d'une hélice elliptique (40) considérée comme optimale en utilisant une transformation intégrale tridimensionnelle.

7. Procédé selon une des revendications 1 à 6, dans lequel les lieux géométriques « cercle », « distance » ou « point » sont considérés comme des cas particuliers d'une ellipse corrélative et **caractérisée par** des paramètres spéciaux et servent éventuellement de base à un calcul ultérieur.

8. Procédé d'ajustage de machines à axes décalés latéralement ou angulairement qui, en utilisant un procédé selon une des revendications 1 à 7, utilise des valeurs correctives trouvées afin de modifier délibérément, au moyen d'outils entraînés à l'électricité et installés en aval, la position des machines associées aux arbres, axes ou cylindres ou de parties de celles-ci.
